# EUROPÄISCHE PATENTANMELDUNG

(11) **EP 2 051 405 A2**
(43) Veröffentlichungstag der Anmeldung: **22.04.2009**
(21) Anmeldenummer: 08017701.7
(22) Anmeldetag: 09.10.2008
(51) Int. Cl.: H04B 7/185

(54) **Verfahren zur Ausrichtung einer Richtantenne eines Satellitenfunk-Kommunikationsterminals**

(30) Priorität: 15.10.2007 DE 102007049595
(71) Anmelder: Deutsches Zentrum für Luft- und Raumfahrt e.V. (DLR), 51147 Köln (DE)
(72) Erfinder: Ernst, Harald, 68259 Mannheim (DE); Scalise, Sandro, 81245 München (DE); Kissling, Christian, 81549 München (DE)
(74) Vertreter: von Kreisler Selting Werner

(57) **Zusammenfassung**

Ein zur Kommunikation mit einem gewünschten Kommunikationssatelliten (S_{H}) vorgesehenes, bodenseitiges Satellitenfunk-Kommunikationsterminal (T) misst die empfangene Interferenz, welche sendeseitig von zwei beidseitig zum gewünschten Satelliten liegenden Nachbarsatelliten (S₁, S₂) erzeugt wird. Diese anhand von bekannten unveränderlichen Trägersignalen, insbesondere Beaconsignalen, empfangene Interferenz bildet dann die Grundlage für die Schätzung der Interferenz, welche im Sendebetrieb des Kommunikationsterminals bei den Nachbarsatelliten erzeugt wird. Durch Einstellung der Richtantenne des Kommunikationsterminals auf eine bei Minimierung der empfangenen Interferenzen bestehende Richtung wird auch die im Sendebetrieb durch das Kommunikationsterminal bei den beiden Nachbarsatelliten erzeugte Interferenz minimiert. Wenn die Nachbarsatelliteninterferenzen unter einen definierbaren Pegel gedämpft werden, ist der Sendebetrieb des Kommunikationsterminals zulässig.

Anwendung bei der Satellitenfunkkommunikation z.B. zur Einrichtung eines DVB-S2/RCS-Terminals.

## Beschreibung

Die Erfindung betrifft ein Verfahren zur Ausrichtung einer Richtantenne eines Satellitenfunk-Kommunikationsterminals auf einen gewünschten Kommunikationssatelliten, der ein bekanntes und unveränderliches Trägersignal, insbesondere ein Beaconsignal, aussendet, unter Einhaltung vorgeschriebener Betriebsparameter und Grenzwerte, die insbesondere die Erzeugung ungewünschter Interferenzen auf der Empfangsseite von benachbarten, ebenfalls solche Trägersignale aussendenden Kommunikationssatelliten infolge der Sendesignale des Kommunikationsterminals betreffen.

Für die Inbetriebnahme eines zur Kommunikation mit einem Satelliten am Boden vorgesehenen Funk-Kommunikationsterminals ist eine äußerst genaue Ausrichtung der Richtantenne des Terminals auf den gewünschten Satelliten notwendig, um die vorgeschriebenen Betriebsparameter, im Besonderen die Erzeugung ungewünschter Interferenz bei benachbarten Satelliten, einzuhalten. Aus diesem Grund erfordert die Installation einer Terminal-Richtantenne meist einen zertifizierten Techniker, der die genaue Ausrichtung der Richtantenne vornehmen muss. Diese Tätigkeit ist mit hohen Kosten und großem Zeitaufwand verbunden.

Das Problem der genauen Ausrichtung unter Einhaltung der notwendigen Betriebsparameter gestaltet sich bei Anwendung in einem mobilen Szenario noch weitaus kritischer. In diesem Fall ist es erforderlich, die Richtantenne des mit einem Satelliten kommunizierenden Terminals äußerst präzise nachzuführen, um die vorgeschriebenen Grenzwerte der erzeugten Interferenz nicht zu überschreiten und dabei auch die selbst empfangene Interferenz zu minimieren. Zusätzlich müssen durch die Bewegung erzeugte Störungen, wie z.B. der Doppler-Versatz, berücksichtigt werden.

Aktuelle Systeme erfordern eine manuelle Feinjustierung, um die Richtantenne des Terminals exakt auf einen Satelliten auszurichten. Diese Feinjustierung wird von einem autorisierten Fachmann durchgeführt, um das entsprechende Kommunikationsterminal betreiben zu dürfen.

Existierende automatische Verfahren beschränken sich auf die Erkennung des gewünschten Satelliten. Erzeugte und empfangene Interferenzen werden dabei jedoch nicht berücksichtigt. Die Einhaltung vorgegebener Grenzwerte und Parameter ist jedoch für die Betriebserlaubnis bestimmter Satellitensysteme (z.B. DVB-RCS) unbedingt erforderlich.

In der Japanischen Patentanmeldung JP-A-2001304879 wird ein System beschrieben, welches eine auf einem beweglichen Fahrzeug befindliche Terminal-Richtantenne automatisch auf einen beliebigen Satelliten ausrichtet, der digitales Broadcasting anbietet. Nachdem die Art des gewünschten Satelliten bestimmt wurde, wird der Empfänger im Terminal auf die Frequenz des Beaconsignals oder eines anderen unveränderlichen Signals dieses Satelliten eingestellt. Die Ausrichtung der Terminal-Richtantenne wird dabei so verändert, dass die empfangene Leistung maximiert wird. Um den Empfänger auf die Frequenz des Beaconsignals bzw. des unveränderlichen Signals einzustellen, wird ein hochgenauer Referenzfrequenzgenerator verwendet.

Aus WO 99/34475 A2 ist ein System bekannt, welches das schnelle und genaue Nachführen einer Terminal-Richtantenne auf einen Satelliten verspricht, ohne dass ein Kompass benötigt wird. Während des Nachführens kann die Richtantenne durch Umwelteinflüsse, z.B. Wetter, Drehmomente, belastet werden. Das beschriebene System kann auf beweglichen Fahrzeugen befestigt werden. Nachdem vom Benutzer der gewünschte Satellit spezifiziert wurde, wird der Himmel nach einem dem System bekannten Primärsatelliten abgesucht. Die Identifizierung dieses Primärsatelliten erfolgt anhand eines Vergleichs zwischen steigender und fallender Flanke des HF-Signals, durch Vergleich der Beaconsignal-Übertragungen, Vergleich der relativen Position mit anderen Satelliten oder über eine Bestimmung des Elevationswinkels des Satelliten bezüglich des Horizonts. Die Position des gewünschten Satelliten wird anschließend relativ zum gefundenen Primärsatelliten errechnet; danach wird die Terminal-Richtantenne auf den Satelliten ausgerichtet, wobei die Steuerung der Richtantenne über Anstieg und Abfall der empfangenen Leistung erfolgt, und die Identität des Satelliten überprüft.

Bei einem aus US 6014372 A bekannten Antennennachführverfahren wird das sequentielle Signal, welches vom Beaconsignal eines Satelliten empfangen wird, decodiert und daraus ein Antennenpositionierungsfehlersignal ("Antenna Positioning Error Signal") erzeugt, welches benutzt wird, um die Antennenausrichtung zu ändern.

In JP-A-10190338 ist ein System beschrieben, in dem Funksignale mehrerer Satelliten im selben Frequenzband identifiziert werden und ein gewünschter Satellit selektiv angesteuert wird, wobei die empfangene Signalleistung maximiert wird.

Bei dem aus KR-950013141-B bekannten System wird eine Terminal-Richtantenne anhand eines Beaconsignals einem gewünschten Satelliten nachgeführt. Aus dem im Terminal empfangenen Signal werden zur Steuerung der Nachführmotoren für Elevation und Azimut Informationen erzeugt, welche das empfangene Eingangssignal maximieren.

Gemäß JP-A-5209950 hat man sich zum Ziel gesetzt, Verbindungsunterbrechungen wie auch eine Verschlechterung der Übertragungsqualität bei einer Satellitenkommunikation zu vermeiden. Dies wird wie bei anderen bekannten Systemen auch durch den Empfang eines Beaconsignals umgesetzt, welches im bodenseitigen Kommunikationsterminal zur Messung des Empfangspegels verwendet wird.

Bei den bekannten Satelliten-Kommunikationssystemen mit Nachführverfahren hat man sich nirgendwo das Ziel gesetzt, die erzeugte und empfangene Interferenz zu minimieren. Lediglich die Maximierung des empfangenen Signalpegels - teilweise unter der Nebenbedingung zur Auswahl eines bestimmten Satelliten - wird zur Antennensteuerung berücksichtigt. Die Maximierung des empfangenen Signals ist aber für den Betrieb bestimmter Satellitensysteme, insbesondere mit Rückkanal wie bei DVB-RCS, nicht ausreichend, weil hier das Kriterium für eine Betriebserlaubnis die sendeseitige Einhaltung bestimmter Interferenz-Maximalwerte ist. Die bekannten Antennenausrichtverfahren können daher nicht verwendet werden.

Aufgabe der vorliegenden Erfindung ist es, ein Verfahren zur Ausrichtung einer Richtantenne eines Satellitenfunk-Kommunikationsterminals auf einen Kommunikationssatelliten zu schaffen, das es erlaubt, die Ausrichtung einer solchen Richtantenne automatisch oder manuell ohne speziellen Techniker vorzunehmen, wobei die vorgeschriebenen Betriebsparameter, insbesondere die erzeugte Interferenz, nicht überschritten werden, d.h. die Grenzwerte für die erzeugte Interferenz für ein zur Funkkommunikation mit Satelliten vorgesehenes Terminal mit Sendeeinrichtung eingehalten werden.

Gemäß der Erfindung, die sich auf ein Verfahren der eingangs genannten Art bezieht, wird diese Aufgabe in vorteilhafter Weise dadurch gelöst, dass nach einer Grobausrichtung der Richtantenne auf den gewünschten Kommunikationssatelliten außer der empfangenen Leistung des vom gewünschten Kommunikationssatelliten kommenden Trägersignals die empfangenen Leistungen der von den beiden benachbarten Kommunikationssatelliten kommenden Trägersignal-Interferenzen gemessen werden, wobei diese beiden gemessenen Empfangsleistungen als Grundlage für eine Schätzung der im Sendebetrieb bei den benachbarten Kommunikationssatelliten erzeugten Interferenzen herangezogen werden, dass nach der Grobausrichtung auf den gewünschten Kommunikationssatelliten die Antennenausrichtung am Kommunikationsterminal feinjustiert wird, indem die Antenne auf eine Richtung eingestellt wird, in welcher die am Kommunikationsterminal gemessenen Empfangsleistungen der von den beiden benachbarten Kommunikationssatelliten kommenden Trägersignal-Interferenzen minimiert sind, und dass der Sendebetrieb des Kommunikationsterminals dann zugelassen wird, wenn eine solche Antennenausrichtung erreicht ist, in der die beiden gemessenen Empfangsleistungen minimiert sind und zugleich unter einen definierbaren Pegel gedämpft werden.

Das Verfahren nach der vorliegenden Erfindung umfasst folgende Funktionen. Es erfolgt eine Ausrichtung der Richtantenne des Satellitenfunk-Kommunikationsterminals auf den gewünschten Satelliten unter garantierter Einhaltung der Interferenzgrenzwerte gegenüber anderen Satellitensystemen. Optional kann das Verfahren nach der vorliegenden Erfindung so ausgelegt werden, dass sich eine Minimierung der erzeugten Interferenz durch optimales Ausrichten der Richtantenne in Bezug auf benachbarte Satelliten, welche gestört werden könnten, und eine Minimierung der empfangenen Interferenz durch optimale Ausrichtung einstellen.

Das Verfahren nach der vorliegenden Erfindung bietet darüber hinaus den Vorteil, dass im Falle, dass der gewünschte Kommunikationssatellit ein GEO(Geostationary Earth Orbit)-stationärer Satellit ist, durch Erkennung von Interferenz eine Störung in einem z.B. nahe vorbeifliegenden MEO(Medium Earth Orbit)-Satelliten vermieden werden kann, indem das Kommunikationsterminal für die Dauer des Überfluges des MEO-Satelliten deaktiviert wird.

Außerdem ist das Verfahren gemäß der vorliegenden Erfindung in der Lage, durch Umwelteinflüsse erzeugte Fehlersituationen, wie z.B. eine Verstellung der Richtantenne durch starken Wind, zu erkennen und entweder selbst zu korrigieren oder das Sendesystem abzuschalten, um keine Interferenzstörungen zu verursachen.

Beim Verfahren gemäß der vorliegenden Erfindung wird in dem am Boden angeordneten Kommunikationsterminal die empfangene Interferenz gemessen, welche von den zum gewünschten Kommunikationssatelliten benachbarten Satelliten erzeugt wird. Diese empfangene Interferenz ist dann die Grundlage für die Schätzung der Interferenz, welche im Sendebetrieb bei den benachbarten Satelliten erzeugt wird.

Durch Minimierung der empfangenen Interferenzen wird auch die erzeugte Interferenz minimiert. Wenn die Nachbarinterferenzen unter einen definierbaren Pegel gedämpft werden, ist der Sendebetrieb des Kommunikationsterminals zulässig.

Zur Durchführung dieses Verfahrens ist es als erstes notwendig, den gewünschten Satelliten ausfindig zu machen und die Richtantenne auf diesen Satelliten in Form einer Grobeinstellung auszurichten. Eine Feinjustierung erfolgt hier noch nicht. Das ungefähre Ansteuern des gewünschten Satelliten kann entweder manuell oder durch automatische Verfahren erfolgen, wie sie z.B. in der bereits erwähnten Patentanmeldung WO 99/34475-A3 beschrieben sind. Zur automatischen Einstellung auf den gewünschten Satelliten ist es jedoch z.B. auch möglich, die Empfangsantenne grob auszurichten und so lange nachzuführen, bis das richtige Beaconsignal des gewünschten Satelliten gefunden wird.

Ist der gewünschte Satellit richtig bestimmt, kann mittels einer exakten Frequenzreferenz, die entweder durch eine vorliegende Satelliten-Frequenztabelle oder durch Signalisierung verfügbar ist, die Frequenzdrift des Low-Noise-Block-Downconverters (LNB) bestimmt werden. Ist der exakte Frequenzversatz bestimmt, dann kann auch die Sendefrequenz exakt eingestellt werden. Zur Ermittlung des LNB-Frequenzversatzes ist es auch denkbar, die Richtantenne nicht auf den gewünschten, sondern auf einen anderen bekannten Satelliten auszurichten und den Frequenzversatz zu der Beaconfrequenz dieses Satelliten zu bestimmen.

In diesem Fall ist es erforderlich, dass die exakte Beaconfrequenz des fremden Satelliten vorher genau bekannt ist oder von dem Satelliten direkt signalisiert wird. Die relativen Positionen und Sendefrequenzen der benachbarten Satelliten können entweder aus einer vorher festgelegten Tabelle entnommen oder direkt vom Hauptsatelliten signalisiert werden. Zur Verwendung des vorliegenden Verfahrens ist es nicht zwingend notwendig, ein als Beaconsignal bezeichnetes Signal zu verwenden; vielmehr ist jedes bekannte und unveränderliche Trägersignal für diesen Zweck ausreichend.

Das Kommunikationsterminal kann im nächsten Schritt die empfangene Signalleistung bei der Frequenz des gewünschten Kommunikationssatelliten sowie bei den Frequenzen der beiden benachbarten Satelliten bestimmen. Die Messung der Empfangsleistung kann z.B. durch Messung und eine nachfolgende Fast-Fourier-Transformation (FFT) durchgeführt werden. Eine weitere Möglichkeit wäre es, den Empfänger auf die anderen Satelliten zu justieren und auf diesem Weg die empfangene Leistung der benachbarten Satelliten zu messen. Das Kommunikationsterminal mischt in diesem Fall das empfangene Beaconsignal um die Frequenz des Beaconsignals des benachbarten Satelliten herunter. Anschließend wird das heruntergemischte Signal im Zeitbereich längere Zeit (Größenordnung 1/10 s) gemittelt und integriert. Die Leistung beim Gleichanteil entspricht dann der empfangenen Interferenz und wird im Weiteren als Grundlage für die Schätzung der verursachten Interferenz verwendet.

Diese Methode wird bei beiden benachbarten Satelliten angewendet. Die Korrektur der eigenen Antennenausrichtung kann anschließend manuell oder automatisch erfolgen.

Für die manuelle Korrektur kann mittels einer Anzeigeeinrichtung die Richtung der Positionsänderung dem Benutzer signalisiert werden. Die Nachführung erfolgt dann manuell durch den Benutzer, bis die Anzeigeeinrichtung die richtige Ausrichtung anzeigt.

Für einen hohen Automatisierungsgrad ist es erstrebenswert, neben der manuellen Einstellung auch eine automatische Korrektur zu ermöglichen. Nachdem die empfangenen Beaconsignalleistungen des gewünschten Kommunikationssatelliten und der beiden benachbarten Satelliten gemäß der oben beschriebenen Methode bestimmt wurden, kann die Richtantenne des Kommunikationsterminals anhand der Signalpegel der Beaconsignale der beiden benachbarten Satelliten nachgeführt werden. Dabei wird in vorteilhafter Weise die Richtantenne in die Richtung des mit dem schwächeren Beaconsignal behafteten, benachbarten Satelliten so lange nachgeführt, bis die empfangenen Signalpegel beider benachbarter Satelliten gleichermaßen niedrig sind. Optional kann die Antennennachführung auch bereits beendet werden, sobald die gemessene Interferenz innerhalb der verlangten Grenzwerte liegt. Anschließend kann innerhalb dieses Bereichs akzeptabler Interferenz zu den benachbarten Satelliten weiter nach anderen Parametern, z.B. dem SNIR (Signal-to-Noise-and-Interference Ratio) des Signals des gewünschten Kommunikationssatelliten, optimiert werden.

Die kontinuierliche Überwachung der Signalpegel des Hauptsatelliten und der beiden benachbarten Satelliten erlaubt es ferner, eine unbeabsichtigte Fehljustierung der Richtantenne, wie sie z.B. durch starken Windeinfluss entstehen kann, zu erkennen und den Fehler entweder selbstständig zu korrigieren oder im Bedarfsfall die Sendeeinrichtung so lange zu deaktivieren, bis die Richtantennenposition manuell korrigiert wurde.

Für mobile Anwendungen kann das gleiche Verfahren wie oben beschrieben verwendet werden, wobei jedoch die technischen Ansprüche an die verwendete Hardware höher sind. Die Messungen und Fourier-Transformationen der empfangenen Signalleistungen müssen z.B. schneller erfolgen. Ferner ist eine Dopplerkorrektur notwendig, um den durch Bewegung verursachten Frequenzversatz zu korrigieren und exakte Messungen zu ermöglichen. Eine zweckmäßige Möglichkeit, um den Mess- und Berechnungsaufwand zur Bestimmung der Signalpegel aufzuteilen, besteht darin, drei Korrelatoren parallel zu betreiben, welche das Signal des gewünschten Kommunikationssatelliten sowie jeweils der benachbarten Satelliten gleichzeitig berechnen und auf diese Weise Zeit sparen.

Die Anwendung des erfindungsgemäß arbeitenden Verfahrens zur automatischen Justierung einer Sende-/Empfangsantenne unter Einhaltung der vorgeschriebenen Richtlinien stellt eine Neuheit dar, da, wie beschrieben, zur Zeit eine ausreichend genaue Antennenausrichtung nicht von jedem Betreiber selbst vorgenommen werden kann, sondern ein zertifizierter Techniker erforderlich ist, um die Einstellung technisch richtig und innerhalb der vorgeschriebenen Betriebsparameter durchzuführen. Der Stand der Technik bietet kein Verfahren, welches die Ausrichtung der Richtantenne mit den einzuhaltenden Interferenz-Grenzwerten ermöglicht.

Das Verfahren gemäß der vorliegenden Erfindung garantiert ferner, dass die bei den benachbarten Satelliten verursachte Interferenz stets kleinstmöglich ist und eine sehr hohe Dämpfung (Größenordnung >20 dB) zum benachbarten Satelliten eingehalten wird.

Eine vorteilhafte Weiterbildung des Verfahrens nach der vorliegenden Erfindung bestünde darin, einen eigenen Satellitenkanal von allen Satellitenbetreibern nur zur Übertragung der Beaconsignale zu verwenden, da auf diese Weise ein Heruntermischen auf die verschiedenen Hauptfrequenzen der benachbarten Satelliten nicht mehr erforderlich wäre, sondern die Signalleistung aller Beacons mit einer Fourier-Transformation erledigt werden könnte. Auf diese Weise könnte der Mess- und Regelungsprozess deutlich beschleunigt werden.

Es ist also festzustellen, dass ein im Folgenden noch einmal mit seinen Vorteilen und Eigenschaften zusammengefasstes Verfahren zur Minimierung der bei benachbarten Satelliten verursachten Interferenz auf der Sendeseite in dieser Form noch nicht vorhanden war.

Es erfolgt in vorteilhafter Weise beim Verfahren nach der vorliegenden Erfindung eine Korrektur des LNB-Frequenzversatzes unter Zuhilfenahme der gemessenen Beaconfrequenzen. Die exakten Referenzfrequenzen können entweder über die Satelliten selbst signalisiert werden oder sie liegen in Form einer internen Tabelle vor.

Es erfolgt eine Messung der empfangenen Signalleistung im Downlink (Empfangskanal) als Grundlage für die Schätzung der verursachten Interferenz im Uplink (Sendekanal). Im Einzelnen werden die Leistungen der empfangenen Beaconsignale des gewünschten Kommunikationssatelliten und der beiden benachbarten Satelliten gemessen.

Es erfolgt in zweckmäßiger Weise eine Ermittlung der Signalleistung der empfangenen Beaconsignale durch Heruntermischen um die Frequenz des Nachbarbeaconsignals, anschließende Mittelung im Zeitbereich (∼1/10 s) und eine Berechnung der Fast-Fourier-Transformierten zur Bestimmung der genauen Signalleistung.

Eine vorteilhafte automatische Feinjustierung der Richtantenne des Kommunikationsterminals besteht darin, diese in Richtung des benachbarten Satelliten mit der schwächeren Empfangsleistung so lange nachzuführen, bis die Empfangsleistungen beider benachbarter Satelliten gleichermaßen klein sind.

Bei erkannter Fehlstellung der Richtantenne erfolgt im Kommunikationsterminal vorteilhaft ein Abschalten der Sendevorrichtung oder eine automatische Korrektur der Richtantennenstellung. Eine Erkennung erfolgt über permanente Hintergrundmessungen und Kontrolle der Signalpegel.

Es besteht in vorteilhafter Weise die Möglichkeit des Abschaltens der Richtantenne bei Erkennen von störerverursachter Interferenz, wie sie z.B. durch vorbeifliegende LEO(Low Earth Orbit)- und MEO(Medium Earth Orbit)-Satelliten verursacht werden kann.

Bei Anwendung des Verfahrens nach der vorliegenden Erfindung für mobile Satellitenterminals wird vorteilhaft eine Korrektur um den durch Bewegung verursachten Dopplereffekt vorgenommen. Eine Beschleunigung der Signalleistungsmessung lässt sich durch paralleles Betreiben von drei Korrelator-Messeinrichtungen zur gleichen Zeit erreichen.

Vorteilhafte Weiterbildungen und Ausgestaltungen der Erfindung sind in den sich auf den Patentanspruch 1 unmittelbar oder mittelbar rückbeziehenden Unteransprüchen angegeben.

Das durch die vorliegende Erfindung vorgeschlagene Verfahren findet vorzugsweise Anwendung im Bereich der Satellitenkommunikation, z.B. zur Einrichtung eines DVB-S2(Digital Video Broadcasting Second Generation)/RCS-Terminals zur Übertragung von multimedialen und interaktiven Diensten, wie z.B. Internet, E-Mail, Voice-over-IP(VoIP)-Audiogesprächen, oder zur Videokonferenz.

Die Erfindung wird nachfolgend anhand von fünf Figuren erläutert. Es zeigen:
- Fig.1: schematisch ein Beispiel für eine zur Durchführung des erfindungsgemäß arbeitenden Verfahrens vorgesehene Systemarchitektur,

- Fig.2: ein Beispiel für die berechneten empfangenen Leistungen der Beaconsignale des gewünschten Satelliten und der beiden benachbarten Satelliten vor der Richtantennennachführung,
- Fig.3: die empfangenen Leistungspegel der Beaconsignale des gewünschten Satelliten und der beiden benachbarten Satelliten nach der Richtantennennachführung,
- Fig.4: Richtantennenausrichtung und Korrekturrichtung vor einer automatisierten iterativen Richtantennennachführung, und Richtantennenausrichtung nach der automatisierten iterativen Richtantennennachführungskorrektur.
- Fig.5: Richtantennenausrichtung nach der automatisierten iterativen Richtantennennachführungskorrektur.

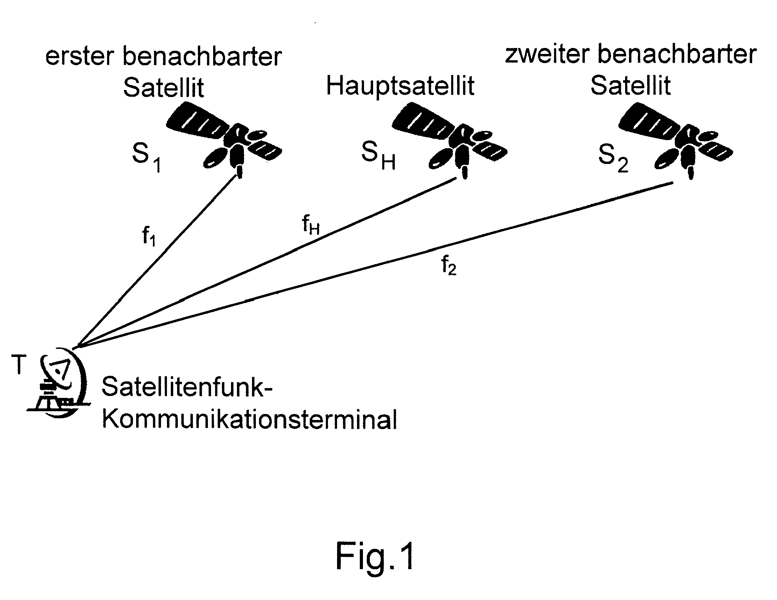

Fig.1 zeigt ein Prinzipbild für eine beispielhafte Systemarchitektur zur Durchführung des Verfahrens nach der vorliegenden Erfindung. Dieses Anschauungsbeispiel weist zur Kommunikation mit Satelliten ein am Boden angeordnetes Satellitenfunk-Kommunikationsterminal T auf, welches sowohl Empfangsals auch Sendeeinrichtungen enthält. Die Systemarchitektur enthält darüber hinaus einen Hauptsatelliten S_{H}, welcher der zur Kommunikationsverbindung mit dem Kommunikationsterminal T gewünschte Satellit ist und auf der Frequenz f_{H} sein Beaconsignal sendet, und zwei benachbarte Satelliten S₁ und S₂ zu beiden Seiten des Hauptsatelliten S_{H}, wobei der erste benachbarte Satellit S₁ auf der Frequenz f₁ und der zweite benachbarte Satellit S₂ auf der Frequenz f₂ sein Beaconsignal sendet.

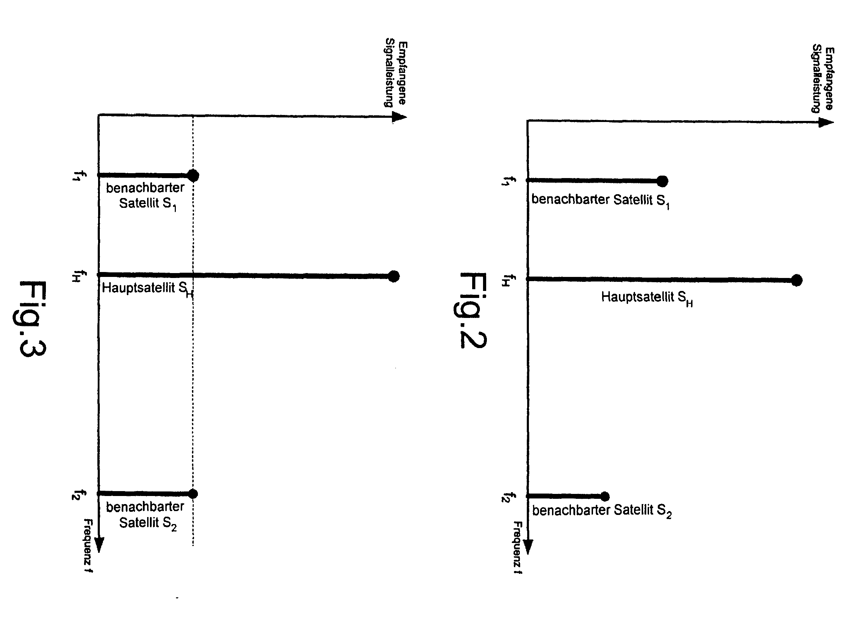

Das Kommunikationsterminal T wird, wie zuvor schon beschrieben, entweder durch Suchen nach dem bekannten Beaconsignal des Hauptsatelliten S_{H} grob ausgerichtet, oder anhand des Erkennens des Beaconsignals eines benachbarten Satelliten S₁, S₂ und anschließender Bestimmung der Relativposition zum gewünschten Hauptsatelliten S_{H}. Ist die Richtantenne des Kommunikationsterminals T grob ausgerichtet, so dass sie das Beaconsignal des gewünschten Hauptsatelliten S_{H} empfängt, beginnt das Terminal T mit den Messungen der Beaconsignale des Hauptsatelliten S_{H} sowie der beiden benachbarten Satelliten S₁ und S₂. Zu diesem Zweck wird, wie bereits beschrieben, das Signal jeweils auf die Frequenzen der beiden benachbarten Satelliten S₁ und S₂ heruntergemischt, im Zeitbereich gemittelt und anschließend Fourier-transformiert. Ein Beispiel für ein zusammengefasstes Ergebnis dieser Methode ist in Fig.2 mit berechneten Signalleistungen dargestellt.

In Fig.2 ist exemplarisch die Signalleistung des Hauptsatelliten S_{H} bei der Frequenz f_{H} sowie der beiden benachbarten Satelliten S₁ und S₂ bei den Frequenzen f₁ und f₂ dargestellt. Wie zu sehen ist, ist die Empfangsleistung des ersten benachbarten Satelliten S₁ größer als die des zweiten benachbarten Satelliten S₂.

Bei manueller Korrektur wird die Anzeigeeinrichtung des Kommunikationsterminals T den Benutzer nun anweisen, die Richtantenne in Richtung des zweiten benachbarten Satelliten S₂ nachzuführen. Ist die optimale Position mit minimaler Interferenz erreicht, signalisiert die Anzeigeeinrichtung im Terminal T diese dem Benutzer.

Für eine automatische Korrektur korrigiert das Kommunikationsterminal T nun selbstständig die Antennenausrichtung um einen kleinen Schritt in Richtung des zweiten benachbarten Satelliten S₂ und wiederholt die Messung. Nach einer oder mehren Iterationen wird dabei ein Zustand erreicht, in dem die empfangene Signalleistung der beiden benachbarten Satelliten S₁ und S₂ gleichermaßen minimiert ist, wie in Fig.3 dargestellt wird. Fig.3 zeigt die empfangenen Signalleistungspegel der Beaconsignale des Hauptsatelliten S_{H} und der beiden benachbarten Satelliten S₁ und S₂ nach bewerkstelligter Antennennachführung.

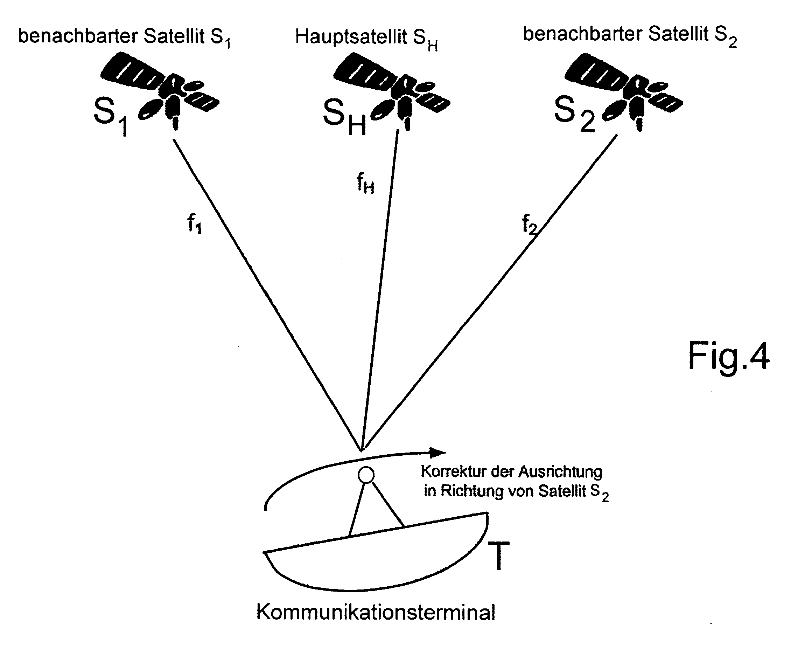

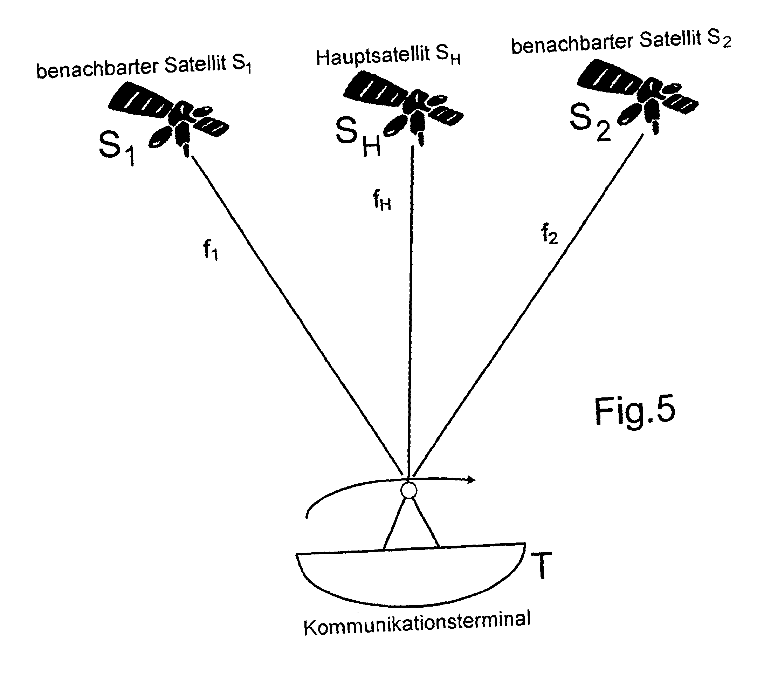

Der Bewegungsablauf der Richtantenne des Kommunikationsterminals T ist nochmals in Fig.4 und Fig.5 verdeutlicht. Fig.4 entspricht der Situation vor der Antennenrichtungskorrektur gemäß den Messergebnissen in Fig.2, während Fig.5 der Situation nach der iterativen Korrektur der Antennenrichtung gemäß dem Zustand in Fig.3 entspricht.

Die in Fig.4 gezeigte Antennenausrichtung und Korrekturrichtung vor der Iteration ist in den Proportionen überzeichnet, genauso wie die in Fig.5 gezeigte Antennenausrichtung nach der iterativen Korrektur.

Alternativ zur gerade geschilderten Minimierung der Interferenz kann die Richtantennennachführung auch bereits beendet werden, sobald die Interferenzen innerhalb der jeweils vorgegebenen Grenzwerte liegen. In diesem Fall kann eine weitere Richtantennennachführung auch andere Kriterien optimieren, z.B. die Maximierung des SNIR (Signal-to-Noise-and-Interference Ratio) des gewünschten Signals innerhalb des Bereichs zulässiger Interferenzen.

### Bezugszeichenliste

- f_{H}: Beaconfrequenz des Hauptsatelliten
- f₁, f₂: Beaconfrequenzen der benachbarten Satelliten
- S_{H}: Hauptsatellit; gewünschter Kommunikationssatellit
- S₁, S₂: Nachbarsatelliten; benachbarte Satelliten
- T: Satellitenfunk-Kommunikationsterminal

## Patentansprüche

1. Verfahren zur Ausrichtung einer Richtantenne eines Satellitenfunk-Kommunikationsterminals auf einen gewünschten Kommunikationssatelliten, der ein bekanntes und unveränderliches Trägersignal, aussendet, unter Einhaltung vorgeschriebener Betriebsparameter und Grenzwerte, die die Erzeugung ungewünschter Interferenzen auf der Empfangsseite von benachbarten, ebenfalls solche Trägersignale aussendenden Kommunikationssatelliten infolge der Sendesignale des Kommunikationsterminals betreffen, **dadurch gekennzeichnet, dass** nach einer Grobausrichtung der Richtantenne auf den gewünschten Kommunikationssatelliten (S_{H}) außer der empfangenen Leistung des vom gewünschten Kommunikationssatelliten kommenden Trägersignals die empfangenen Leistungen der von den beiden benachbarten Kommunikationssatelliten (S₁, S₂) kommenden Trägersignal-Interferenzen gemessen werden, wobei diese beiden gemessenen Empfangsleistungen als Grundlage für eine Schätzung der im Sendebetrieb bei den benachbarten Kommunikationssatelliten erzeugten Interferenzen herangezogen werden, dass nach der Grobausrichtung auf den gewünschten Kommunikationssatelliten die Antennenausrichtung am Kommunikationsterminal (T) feinjustiert wird, indem die Antenne auf eine Richtung eingestellt wird, in welcher die am Kommunikationsterminal gemessenen Empfangsleistungen der von den beiden benachbarten Kommunikationssatelliten kommenden Trägersignal-Interferenzen minimiert sind, und dass der Sendebetrieb des Kommunikationsterminals dann zugelassen wird, wenn eine solche Antennenausrichtung erreicht ist, in der die beiden gemessenen Empfangsleistungen minimiert sind und zugleich unter einen definierbaren Pegel gedämpft werden.

2. Verfahren nach Anspruch 1, **dadurch gekennzeichnet, dass** die Grobausrichtung der Richtantenne auf den gewünschten Kommunikationssatelliten (S_{H}) manuell oder durch ein automatisches Verfahren vorgenommen wird.

3. Verfahren nach einem der vorhergehenden Ansprüche, **dadurch gekennzeichnet, dass** in einem automatischen Einstellungsverfahren nach der Grobausrichtung und noch vor der abschließenden Feinjustierung die Richtantenne des Kommunikationsterminals (T) im Empfangsbetrieb so lange nachgeführt wird, bis das Trägersignal des gewünschten Kommunikationssatelliten (S_{H}) gefunden wird.

4. Verfahren nach einem der vorhergehenden Ansprüche, **dadurch gekennzeichnet, dass,** nachdem der gewünschte Kommunikationssatellit (S_{H}) richtig bestimmt wurde, mittels einer exakten Frequenzreferenz, die entweder durch eine vorliegende Satelliten-Frequenztabelle oder durch Signalisierung verfügbar ist, der Frequenzversatz eines Low-Noise-Block-Abwärtskonverters LNB im Kommunikationsterminal (T) bestimmt wird und dass nach der Bestimmung des exakten Frequenzversatzes auch die Sendefrequenz des Kommunikationsterminals exakt eingestellt wird.

5. Verfahren nach einem der Ansprüche 1 bis 3, **dadurch gekennzeichnet, dass,** nachdem der gewünschte Kommunikationssatellit (S_{H}) richtig bestimmt wurde, zur Ermittelung des Frequenzversatzes eines Low-Noise-Block-Abwärtskonverters LNB im Kommunikationsterminal (T) die Richtantenne nicht auf den gewünschten, sondern einen anderen bekannten Satelliten ausgerichtet und der Frequenzversatz zu dem von diesem Satelliten ausgesendeten Signal, insbesondere Beaconsignal, bestimmt wird, wobei es erforderlich ist, dass die exakte Sendefrequenz des fremden Satelliten vorher genau bekannt ist oder von dem Satelliten direkt signalisiert wird, und dass nach der Bestimmung des exakten Frequenzversatzes auch die Sendefrequenz des Kommunikationsterminals exakt eingestellt wird.

6. Verfahren nach einem der vorhergehenden Ansprüche, **dadurch gekennzeichnet, dass** die relativen Positionen und Sendefrequenzen der benachbarten Satelliten (S₁, S₂) entweder aus einer vorher festgelegten Tabelle entnommen oder direkt vom gewünschten Kommunikationssatelliten (S_{H}) signalisiert werden.

7. Verfahren nach einem der vorhergehenden Ansprüche, **dadurch gekennzeichnet, dass** im Kommunikationsterminal (T) zur Bestimmung der empfangenen Leistungen bei der Frequenz des Trägersignals des gewünschten Kommunikationssatelliten (S_{H}) sowie bei den Frequenzen der Trägersignale der beiden benachbarten Satelliten (S₁, S₂) die gesamte Empfangsleistung der Trägersignale gemessen und nachfolgend eine Fast-Fourier-Transformation FFT durchgeführt wird und dass diese Methode auf beide benachbarten Satelliten angewandt wird.

8. Verfahren nach einem der Ansprüche 1 bis 6, **dadurch gekennzeichnet, dass** der Empfänger des Kommunikationsterminals (T) auf die benachbarten Satelliten (S₁, S₂) justiert und auf diesem Weg die empfangene Leistung der benachbarten Satelliten gemessen wird, dass im Kommunikationsterminal das empfangene Trägersignal des gewünschten Kommunikationssatelliten (S_{H}) um die Frequenz des Trägersignals des benachbarten Satelliten heruntergemischt wird, dass anschließend das heruntergemischte Signal im Zeitbereich längere Zeit, gemittelt und integriert wird, dass die dann der empfangenen Interferenz entsprechende Leistung beim Gleichanteil im Weiteren als Grundlage für die Schätzung der verursachten Interferenz verwendet wird und dass diese Methode auf beide benachbarten Satelliten angewandt wird.

9. Verfahren nach einem der vorhergehenden Ansprüche, **dadurch gekennzeichnet, dass** eine manuelle Feinjustierung der Antennenausrichtung des Kommunikationsterminals (T) mittels einer Anzeigeeinrichtung vorgenommen wird, welche die Richtung der Positionsänderung dem Benutzer signalisiert, und dass die feinjustierende Nachführung der Richtantenne dann manuell durch den Benutzer so lange durchgeführt wird, bis die Anzeigeeinrichtung die richtige Ausrichtung anzeigt.

10. Verfahren nach einem der Ansprüche 1 bis 8, **dadurch gekennzeichnet, dass** eine automatisierte Feinjustierung der Richtantenne des Kommunikationsterminals (T) in einer solchen Weise durchgeführt wird, dass, nachdem die empfangenen Leistungen der Trägersignale des gewünschten Kommunikationssatelliten (S_{H}) und der benachbarten Satelliten (S₁, S₂) bestimmt wurden, die Richtantenne des Kommunikationsterminals anhand der Signalpegel der Trägersignale der Nachbarsatelliten nachgeführt wird, wobei die Richtantenne in die Richtung des mit dem schwächeren Trägersignalpegel behafteten, benachbarten Satelliten so lange nachgeführt wird, bis die empfangenen Signalpegel der Trägersignale beider benachbarten Satelliten gleichermaßen niedrig sind.

11. Verfahren nach einem der Ansprüche 1 bis 8, **dadurch gekennzeichnet, dass** eine automatisierte Feinjustierung der Richtantenne des Kommunikationsterminals (T) in einer solchen Weise durchgeführt wird, dass, nachdem die empfangenen Leistungen der Trägersignale des gewünschten Kommunikationssatelliten (S_{H}) und der benachbarten Satelliten (S₁, S₂) bestimmt wurden, die Richtantenne des Kommunikationsterminals anhand der Signalpegel der Trägersignale der benachbarten Satelliten nachgeführt wird, wobei die Antennennachführung beendet wird, sobald die gemessenen Trägersignal-Interferenzen zu den benachbarten Satelliten innerhalb vorgegebener Grenzwerte liegen.

12. Verfahren nach Anspruch 11, **dadurch gekennzeichnet, dass** anschließend innerhalb dieses Bereichs akzeptabler Trägersignal-Interferenz zu den benachbarten Satelliten (S₁, S₂) weiter nach anderen Parametern, wie dem SNIR (Signal-to-Noiseand-Interference Ratio) des gewünschten Signals optimiert wird.

13. Verfahren nach Anspruch 10 oder 11, **dadurch gekennzeichnet, dass** die Überwachung der Signalpegel des gewünschten Kommunikationssatelliten (S_{H}) und der benachbarten Satelliten (S₁, S₂) kontinuierlich erfolgt, so dass eine unbeabsichtigte Fehljustierung der Richtantenne des Kommunikationsterminals (T), wie sie durch starken Windeinfluss entstehen kann, erkannt wird und der Fehler entweder selbstständig korrigiert wird oder im Bedarfsfall die Sendeeinrichtung so lange deaktiviert wird, bis die Antennenausrichtung manuell korrigiert wird.

14. Verfahren nach einem der Ansprüche 10 bis 13, **dadurch gekennzeichnet, dass** für mobile Anwendungen zusätzlich eine Dopplerkorrektur durchgeführt wird, um den durch Bewegung verursachten Frequenzversatz zu korrigieren und exakte Messungen zu ermöglichen.

15. Verfahren nach einem der Ansprüche 10 bis 13, **dadurch gekennzeichnet, dass** insbesondere für mobile Anwendungen der Mess- und Berechnungsaufwand im Kommunikationsterminal (T) zur Bestimmung der Signalpegel aufgeteilt wird und dass dazu drei Korrelatoren parallel betrieben werden, welche das Trägersignal des gewünschten Kommunikationssatelliten (S_{H}) sowie jeweils der beiden benachbarten Satelliten (S₁, S₂) gleichzeitig berechnen und auf diese Weise Zeit sparen.

16. Verfahren nach einem der vorhergehenden Ansprüche, **dadurch gekennzeichnet, dass** die Richtantenne des Kommunikationsterminals (T) bei Erkennen von störerverursachter Interferenz, wie sie durch vorbeifliegende LEO(Low Earth Orbit)- und MEO(Medium Earth Orbit)-Satelliten verursacht werden kann, abgeschaltet wird.
